# EUROPEAN PATENT APPLICATION

(11) **EP 4 674 554 A1**
(43) Date of publication of application: **07.01.2026**
(21) Application number: 25185165.5
(22) Date of filing: 25.06.2025
(51) Int. Cl.: B23K 9/10

(54) **HYSTERETIC MODE BOOST VOLTAGE CONTROL FOR REDUCED BROAD SPECTRUM NOISE EMISSION**

(30) Priority: 28.06.2024 US 202463665960 P; 20.06.2025 US 202519243937
(71) Applicant: Illinois Tool Works Inc., Glenview IL 60025 (US)
(72) Inventor: DICKINSON, Darin, Glenview, 60025 (US); KUNDINGER, Cody, Glenview, 60025 (US); EGGLESTON, James, Glenview, 60025 (US)
(74) Representative: HGF

(57) **Abstract**

Systems and methods are provided for hysteretic mode boost voltage control for reduced broad spectrum noise emission.

## Description

### CLAIM OF PRIORITY

This patent application claims priority to and claims benefit from United States Provisional Patent Application Serial No. 63/665,960, filed June 28, 2024. The above identified application is hereby incorporated herein by reference in its entirety.

### BACKGROUND

Welding has become increasingly ubiquitous. Welding can be performed in an automated manner or in a manual manner (e.g., being performed by a human). Various equipment or components may be used during welding operations. For example, power sources may be used to provide power to various devices or components during welding operations.

In some instances, conventional welding solutions may have some limitations and/or disadvantages. For example, use of power sources in conventional welding set up may have limitations and/or disadvantages, such as with respect to effects on communication functions in the welding setups.

Further limitations and disadvantages of conventional approaches will become apparent to one skilled in the art, through comparison of such approaches with some aspects of the present systems and methods set forth in the remainder of this disclosure with reference to the drawings.

### BRIEF SUMMARY

Aspects of the present disclosure relate to welding solutions. More specifically, various implementations in accordance with the present disclosure are directed to systems and methods for hysteretic mode boost voltage control for reduced broad spectrum noise emission, substantially as illustrated by or described in connection with at least one of the figures, and as set forth more completely in the claims.

These and other advantages, aspects and novel features of the present disclosure, as well as details of an illustrated implementation thereof, will be more fully understood from the following description and drawings.

### BRIEF DESCRIPTION OF THE DRAWINGS

Fig. 1 shows an example welding-type setup.
Fig. 2 shows an example welding-type system that may be configured to use hysteretic mode boost voltage control in accordance with the present disclosure.
Figs. 3A-3B are graphs illustrating signal spectrum for output signals in communication medium.
Figs. 4A-4B are graphs illustrating Fast Fourier Transform (FFT) of a portion of the frequency spectrum on a communication medium in a welding-type system.
Fig. 5 is graph illustrating Fast Fourier Transform (FFT) for output signals in communication medium when applying boost idle state adjustment.
Fig. 6 is graph illustrating bus voltage when applying boost idle state adjustment.
Fig. 7 is graph illustrating example load step from idle state into hot start.

### DETAILED DESCRIPTION

As utilized herein, the terms "circuits" and "circuitry" refer to physical electronic components (e.g., hardware), and any software and/or firmware ("code") that may configure the hardware, be executed by the hardware, and/or otherwise be associated with the hardware. As used herein, for example, a particular processor and memory (e.g., a volatile or non-volatile memory device, a general computer-readable medium, etc.) may comprise a first "circuit" when executing a first one or more lines of code and may comprise a second "circuit" when executing a second one or more lines of code. Additionally, a circuit may comprise analog and/or digital circuitry. Such circuitry may operate, for example, on analog and/or digital signals. It should be understood that a circuit may be in a single device or chip, on a single motherboard, in a single chassis, in a plurality of enclosures at a single geographical location, in a plurality of enclosures distributed over a plurality of geographical locations, etc. Similarly, the term "module" may, for example, refer to a physical electronic component (e.g., hardware) and any software and/or firmware ("code") that may configure the hardware, be executed by the hardware, and/or otherwise be associated with the hardware.

As utilized herein, circuitry or module is "operable" to perform a function whenever the circuitry or module comprises the necessary hardware and code (if any is necessary) to perform the function, regardless of whether performance of the function is disabled or not (e.g., by a user-configurable setting, factory trim, etc.).

As utilized herein, "and/or" means any one or more of the items in the list joined by "and/or". As an example, "x and/or y" means any element of the three-element set {(x), (y), (x, y)}. In other words, "x and/or y" means "one or both of x and y." As another example, "x, y, and/or z" means any element of the seven-element set {(x), (y), (z), (x, y), (x, z), (y, z), (x, y, z)}*.* In other words, "x, y and/or z" means "one or more of x, y, and z." As utilized herein, the term "exemplary" means serving as a non-limiting example, instance, or illustration. As utilized herein, the terms "for example" and "e.g." set off lists of one or more non-limiting examples, instances, or illustrations.

Welding-type power, as used herein, refers to power suitable for welding, plasma cutting, induction heating, CAC-A (carbon arc cutting/air) and/or hot wire welding/preheating (including laser welding and laser cladding). Welding-type power supply, as used herein, refers to a power supply that can provide welding-type power. A welding-type power supply may include power generation components (e.g., engines, generators, etc.) and/or power conversion circuitry to convert primary power (e.g., engine-driven power generation, mains power, etc.) to welding-type power.

Welding-type operations, as used herein, comprise operations in accordance with any known welding technique, including flame welding techniques such as oxy-fuel welding, electric welding techniques such as shielded metal arc welding (e.g., stick welding), metal inert gas welding (MIG), tungsten inert gas welding (TIG), resistance welding, as well as gouging (e.g., carbon arc gouging), cutting (e.g., plasma cutting), brazing, induction heating, soldering, and/or the like.

Welding-type setup, as used herein, refers to any setup comprising welding related devices or equipment (e.g., welding power sources, welding torch, welding gear such as headwear and the like, auxiliary devices or systems, etc.) which are used in facilitating and/or in conjunction with welding-type operations.

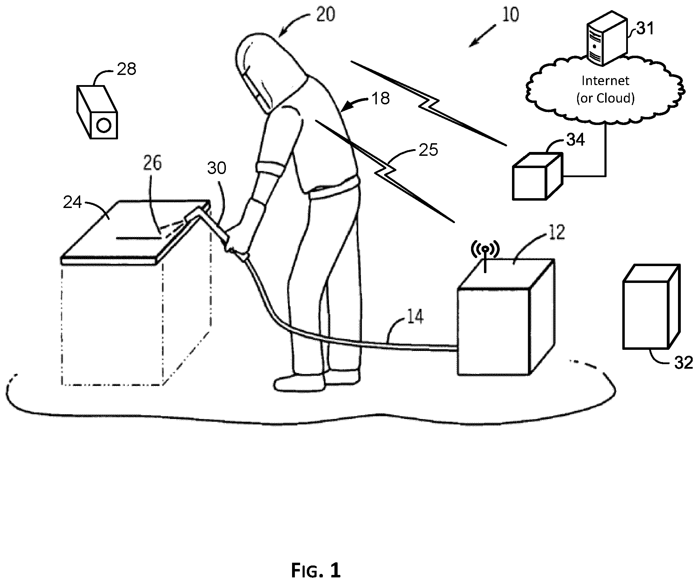

Fig. 1 shows an example welding-type setup. Referring to Fig. 1, there is shown an example welding-type setup 10 that may be used for welding-type operations, in which an operator (user) 18 is wearing headwear 20 and welding a workpiece 24 using a torch 30 to which power is delivered by equipment 12 via a conduit 14, with weld monitoring equipment 28, which may be available for use in monitoring welding operations.

The equipment 12 may comprise a power source, optionally a source of a shield gas and, where wire/filler material is to be provided automatically, a wire feeder. Further, in some instances an engine 32 may be used to drive equipment or components used during welding operations. The engine 32 may comprise a gas engine or a liquefied petroleum (LP) engine. The engine 32 may drive generators, power sources, etc. used during welding operations.

The welding-type setup 10 of Fig. 1 may be configured to form a weld joint by any known welding-type technique. For example, optionally in any implementation, the welding equipment 12 may be arc welding equipment that provides a direct current (DC) or alternating current (AC) to a consumable or non-consumable electrode of a torch 30. The electrode delivers the current to the point of welding on the workpiece 24. In the welding-type setup 10, the operator 18 controls the location and operation of the electrode by manipulating the torch 30 and triggering the starting and stopping of the current flow. In other implementations, a robot or automated fixture may control the position of the electrode and/or may send operating parameters or trigger commands to the welding system. When current is flowing, an arc 26 is developed between the electrode and the workpiece 24. The conduit 14 and the electrode thus deliver current and voltage sufficient to create the electric arc 26 between the electrode and the workpiece. The arc 26 locally melts the workpiece 24 and welding wire or rod supplied to the weld joint (the electrode in the case of a consumable electrode or a separate wire or rod in the case of a non-consumable electrode) at the point of welding between electrode and the workpiece 24, thereby forming a weld joint when the metal cools.

Optionally in any implementation, the weld monitoring equipment 28 may be used to monitor welding operations. The weld monitoring equipment 28 may be used to monitor various aspects of welding operations, particularly in real-time (that is as welding is taking place). For example, the weld monitoring equipment 28 may be operable to monitor arc characteristics such as length, current, voltage, frequency, variation, and instability. Data obtained from the weld monitoring may be used (e.g., by the operator 18 and/or by an automated quality control system) to ensure proper welding.

As shown, the equipment 12 and headwear 20 may communicate via a link 25 via which the headwear 20 may control settings of the equipment 12 and/or the equipment 12 may provide information about its settings to the headwear 20. Although a wireless link is shown, the link may be wireless, wired, or optical.

Optionally in any implementation, equipment or components used during welding operations may be driven using engines. For example, the engine 32 may drive generators, power sources, etc. used during welding operations. In some instances, it may be desired to obtain information relating to used engines. For example, data relating to engines (and operations thereof) used during welding operations may be collected and used (e.g., based on analysis thereof) in monitoring and optimizing operations of these engines. The collection and use of such data may be performed telematically-that is, the data may be collected locally, subjected to at least some processing locally (e.g., formatting, etc.), and then may be communicated to remote management entities (e.g., centralized management locations, engine providers, etc.), using wireless technologies (e.g., cellular, satellite, etc.).

Optionally in any implementation, a dedicated controller (e.g., shown as element 34 in Fig. 1) may be used to control, centralize, and/or optimize data handling operations. The controller 34 may comprise suitable circuitry, hardware, software, or any combination thereof for use in performing various aspects of the engine related data handling operations. For example, the controller 34 may be operable to interface with the engine 32 to obtain data related thereto. The controller 34 may track or obtain welding related data (e.g., from weld monitoring equipment 28, from equipment 12, etc.). The controller 34 may then transmit the data (e.g., both engine related and weld related data), such as to facilitate remote monitoring and/or management, by way of wireless communications. This may be done using cellular and/or satellite telematics hardware, for example.

In some example implementations, welding-type systems or setups, such as the welding-type setup 10, may be configured for collecting and reporting data relating to welding-type operations and/or to functions or components utilized during welding-type operations. For example, data from welding processes, power sources, welding-related accessories etc. in a weld setup may be collected. In this regard, the collected data may comprise, for example, current, voltage, wire feed speed, weld states, and numerous other power source parameters and settings.

The collected data may then be sent to remote entities (e.g., a remote server 31, which may be a manufacturer-controlled, Internet-based cloud server) and/or to local systems or devices (e.g., local PC, a tablet, a smartphone, etc.). The collected data may be utilized in enhancing welding-related systems and/or operations. For example, manufacturers may utilize the collected data to identify issues (and correct them) and/or devise modifications or improvements in the various components. Further, users may be able to generate reports on collected data to measure, document, and improve their processes.

Improving or enhancing operation of the various components of welding-type setups, such as the welding-type setup 10 of Fig. 1, is desirable. Such improvements or enhancements may be achieved by improving or enhancing particular components of welding-types setups and/or parameters associated therewith. For example, in some instances enhancing operation of welding-type setup may entail applying corrective measures to address issues that may affect performance of the welding-type setup or components thereof, and/or quality of welding operations. One such issue is noise-namely, electrical noise introduced by certain components in the welding-type setup under particular conditions.

In this regard, in some instances welding-type setups may incorporate switch-mode power supplies (sources), which may be used in supplying power to other components in the setup. Such switch-mode power supplies may be electrically noisy, which may pose challenges and/or create issues-e.g., in terms of regulatory compliance and/or effects on applied technologies. For example, the presence of such noise may be particularly detrimental when utilizing certain communication technologies in the welding-type setup for communication, such as weld circuit communication (e.g., Miller ArcReach^{®}, also referred to hereinafter as "ArcReach"), which may utilize welding-type cables or connectors already used in the system for communication of data between components in the setup. Such communication solutions may require the conducted emissions of the machine to be below a certain threshold in order to work with optimal performance and/or to ensure regulatory compliance. Thus, it may be necessary that noise be mitigated or reduced.

Conventional solutions, if any existed, for addressing such noise related issues may be entail use of large and expensive filtering components which may be used to attenuate noise-e.g., to comply with conducted emissions thresholds found in various standards, such as CE (Conformite Europeenne) and CSA (Canadian Standards Association). Such filtering components may be used, e.g., in power supplies to ensure that communication technologies used therein, such as weld circuit communication (e.g., ArcReach) are possible, particularly when utilizing the welding-type cables or connectors as communication medium.

In various implementations based on the present disclosure, welding-type setups may be configured to incorporate and use power supply noise mitigation, and to do so in enhanced manner-that is, where power supply noise mitigation may be done in different and enhanced manner compared to conventional solutions, if any existed, particularly by omitting the need to use of dedicated components for filtering or otherwise removing or reducing noise. In this regard, as noted there may be a need to reduce conducted emissions, particularly under certain conditions, such as to improve bind performance with the machine under light load (not welding) and/or to ensure regulatory compliance (e.g., with respect emissions thresholds associated with applicable regulatory standards or requirements). The signal to noise ratio (SNR) may need to be high in the communication band in some instances, such as to enable communicating over long distance cables when using weld circuit communication. However, increasing the signal strength of communications (to improve SNR) may not be possible. As noted, in many instances a primary source of noise may be noise introduced by components of the system-e.g., broad spectrum noise from power source in the system, or particularly components thereof (e.g., boost converter), under certain conditions (e.g., when at idle). As such, the SNR may be increased by reducing noise that may affect weld circuit communication (rather than by increasing the signal strength), to achieve maximum performance. Accordingly, solutions based on the present disclosure may incorporate measures for reducing noise in order to improve SNR performance.

For example, in some welding-type systems that utilize weld circuit communication (e.g., ArcReach), the noise floor may be 36-30dB on both primary and secondary bands (132kHz and 115kHz). The noise may occur under certain conditions, such as when rectified voltage (V_{rec}) is greater than half bus voltage (V_{bus})-that is, where V_{rec} > ½ V_{bus} (e.g., V_{rec} > 465 Vdc, assuming V_{bus} = 930V_{dc}). Using Fast Fourier Transform (FFT) on the output studs shows that there is a broad distribution of noise in the 100-140kHz range. In accordance with the present disclosure, noise may be mitigated or reduced by turning the boost off-e.g., dropping the noise floor by ~10dB. This may be done by use of hysteretic voltage control.

In this regard, the source of noise may be primarily due to the skip pulse minimum duty of the boost converter while unloaded. Due to the stacked bus, the boost may operate in a "burst mode" at idle when V_{rect} < ½ V_{bus}. This mode doesn't produce the broad spectrum noise that skip pulse does. To mimic this characteristic, a hysteretic voltage control is implemented at idle. In this regard, when primary current is less than 1A, the boost may operate in this mode, except when single phase detect bit is true. Voltage control may be achieved by controlling the waveshape bite.g., when V_{bus} hi > 930V waveshape is on, and when V_{bus} lo < 920V waveshape off. This results in burst mode operation at any line voltage.

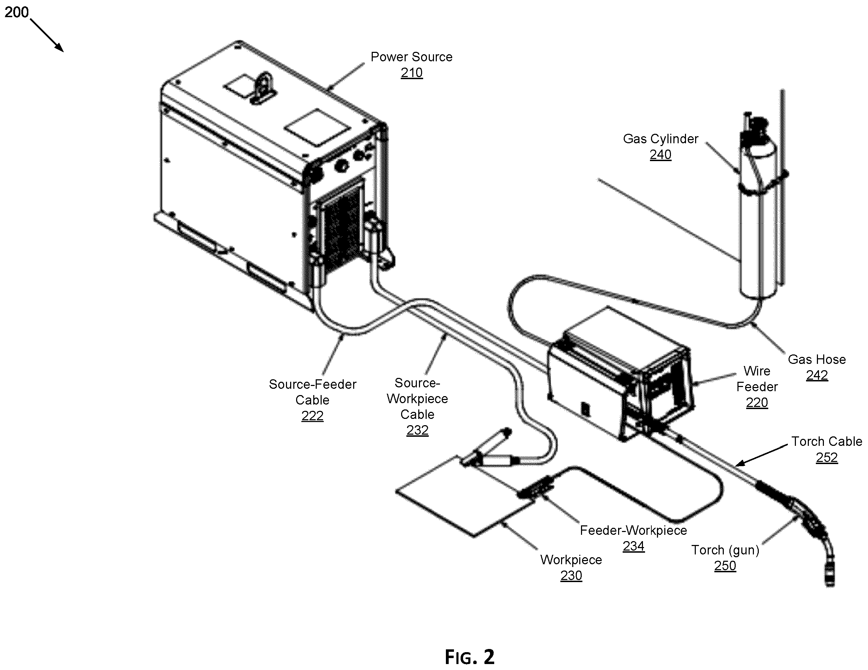

Fig. 2 shows an example welding-type system that may be configured to use hysteretic mode boost voltage control in accordance with the present disclosure. Referring to Fig. 2, there is shown a welding-type system 200.

As illustrated in Fig. 2, the welding-type system 200 comprises a power source 210, a wire feeder 220, a welding torch (gun) 250, a gas cylinder (tank) 240, and one or more welding-type cables or connectors for providing connections between various components in the welding-type system 200 and/or connections to a workpiece 230 to which welds may be applied. The welding-type cables or connectors may comprise, for example, a source-feeder cable 222, a source-workpiece cable 232, a feeder-workpiece cable 234, and a gas connector (hose) 242.

The power source 210 may be configured to provide power to one or more other components in the welding-type system 200. The power source 210 may comprise suitable hardware and circuitry (e.g., control circuits) for facilitating the providing of power, and/or controlling or managing functions associated with the providing of power.

The wire feeder 220 may be configured to feed electrode wire during welding-type operations. The electrode wire may be fed from a wire source, such as a wire spool or the like. The wire source may be incorporated into the wire feeder 220-that is, the wire feeder 220 may incorporate component for receiving and incorporating the wire source (e.g., wire spool)-or alternatively the wire source may be separate from and external to the wire feeder 220 (e.g., a separate physical component in the setup).

The welding torch (gun) 250 may be configured to apply welds. In this regard, any suitable welding torch (gun) may be used. The gas cylinder (tank) 240 may be configured to provide gas or gases (e.g., shielding gas, etc.) during welding-type operations.

The source-feeder cable 222 may be configured for connecting the power source 210 and the wire feeder 220, to facilitate providing power (e.g., applying voltage) to the wire feeder 220. Similarly, the source-workpiece cable 232 may be configured for connecting the power source 210 and the workpiece 230, to facilitate providing power (e.g., applying voltage) to the workpiece 230. In this regard, the feeder-workpiece cable 234 may incorporate clamping mechanism to enable clamping onto the workpiece 230, such as when wanting to connect the power source 210 to the workpiece 230.

The feeder-workpiece cable 234 may be configured for connecting the wire feeder 220 and the workpiece 230, which allows for closing a circuit comprising the power source 210, the wire feeder 220, and the workpiece 230. The feeder-workpiece cable 234 may incorporate clamping mechanism to enable clamping onto the workpiece 230, such as when wanting to connect the wire feeder 220 to the workpiece 230.

The gas connector (hose) 242 may be configured for facilitating supplying of gas (or gases) from the gas cylinder (tank) 240-e.g., to welding torch (gun) 250. For example, the gas connector (hose) 242 may be used to connect the gas cylinder (tank) 240 to the wire feeder 220, which in turn supplies the gas (or gases) to the torch (gun) 250, along with the electrode wire and power, which may be received from the power source 210. In this regard, as illustrated in Fig. 2, a single torch cable 252 may be used to connect the wire feeder 220 and the welding torch (gun) 250, with the torch cable 252 being used to provide the fed electrode wire, the gas (or gases), and the power. However, the disclosure is not limited to such an arrangement.

During welding operations two circuits may be formed in welding-type systems/setups (e.g., the welding-type system 200): 1) a weld circuit, and 2) a feeder power circuit (or "secondary circuit"). For example, in the arrangement illustrated in Fig. 2, the weld circuit comprises the power source 210, the source-feeder cable 222, the wire feeder 220, the torch cable 252, the welding torch (gun) 250, the workpiece 230, and the source-workpiece cable 232, with the circuit being closed when the source-workpiece cable 232 is connected to (e.g., clamped onto) the workpiece 230 and the welding torch (gun) 250 is actively used in applying welds. The feeder power circuit comprises the power source 210, the source-feeder cable 222, the wire feeder 220, the feeder-workpiece cable 234, the workpiece 230, and the source-workpiece cable 232, with the circuit being closed when both the source-workpiece cable 232 and the feeder-workpiece cable 234 are connected to (e.g., clamped onto) the workpiece 230. In this regard, the feeder-workpiece cable 234 may be clamped onto the workpiece 230 when wanting to close the feeder power circuit.

In some instances, welding-type systems (e.g., the welding-type system 200) may utilize communication technologies that are particularly susceptible to noise in the system. For example, in instances where the power source 210 may be a switch-mode power supply based device, electrical noise introduced by the power source 210 may be detrimental when utilizing certain communication technologies in the welding-type setup for communication, such as weld circuit communication (e.g., ArcReach), which may utilize existing welding-type cables or connectors for communication of data between components in the systems. Such communication solutions may use particular frequencies (e.g., 115 KHz and 132 KHz).

The welding-type system may create noise that may affect such communications (particularly at such frequencies). The welding-type system may, e.g., create noise when in idle state, and particularly when there is no load on the weld circuit. In this regard, all electronics in a typical welding power source (e.g., the power source 210) may contribute to electrical noise. Such contributors may include, e.g., a boost converter component, a main inverter component (e.g., a dual forward topology), and a flyback control power component.

Such noise may affect performance in the system. For example, when using weld circuit communication, the noise may prevent components (e.g., a power source and an accessory) from binding-that is, noise may cause components to fail to bind. This may be more prevalent at higher line voltages, and/or may be made worse by feeder attenuation prior to binding.

Implementations based on the present disclosure may be configured to address noise, such as by counteracting effects of particular noise contributors. For example, various embodiments may be directed to counteracting noise introduced by the boost power converter. In this regard, while at Idle or minimum duty, the boost converter may naturally go into pulse skipping mode. However, such mode creates additional switching harmonics that result in broad spectrum noise. Accordingly, solutions based on the present disclosure may address such issues by mitigating noise introduced during idle mode. This may be achieved, e.g., by use of hysteretic voltage control of the boost while in idle state. For example, when the system detects that it is in idle state, and that there's no load in the system (e.g., no active welding), the system may switch the mode of operation from closed-loop control to hysteretic control. The hysteretic voltage control may allow for squashing the noise floor being produced by the boost and the odd harmonics, which may otherwise affect the communication medium (e.g., the welding-type cable(s) or connector(s) used for weld circuit communication).

In various example implementations, existing circuitry (e.g., a digital signal processing (DSP) microprocessor in power source) may be configured to provide noise mitigation-that is, without requiring adding new hardware, but rather by configuring existing hardware to provide the required functions for implementing the noise mitigation as described herein. In other words, in some instances, the noise mitigation as described herein may be done completely in software (configured for use in existing hardware, such as any processing circuits already used in the system-e.g., DSP microprocessor used in facilitating weld circuit communication) without requiring adding any new hardware, or even modifying any existing hardware. For example, in some instances, the noise mitigation may comprise adding and/or using a new state-e.g., an "idle" state as a subset of the boost run state in the boost state machine (that is, a boost idle state). The boost idle state may be configured to implement hysteretic voltage control, which may run on top of the analog current mode control compensation normally used. The hysteretic voltage control may force the boost to operate in a form of burst mode control instead of pulse skipping. This may be accomplished by decimating the output of a voltage compensator in the system, and then releasing the voltage compensator, such as by way of a pull-down voltage divider on a voltage error output. In some instances, burst mode operation may create significant "off time" (e.g., of 200-300 ms between 20-30 ms bursts). This eliminates the broad-spectrum noise created otherwise and may even further improve idle communication due to amount of time the boost is off.

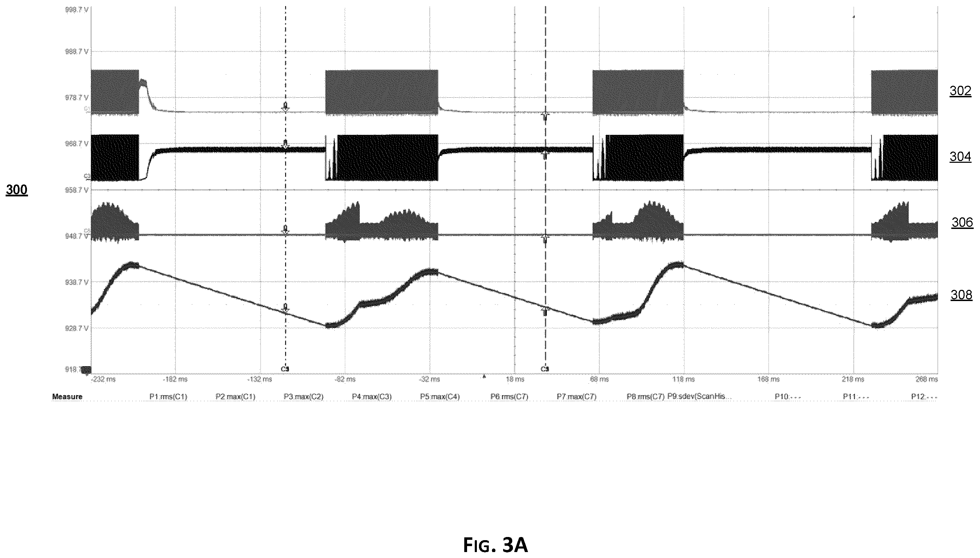

For example, a welding-type system that utilizes weld circuit communication (e.g., ArcReach), the noise floor may be 36-30dB on both primary and secondary bands (132kHz and 115kHz). The noise may occur under certain conditions, such as when rectified voltage (Vrec) is greater than half bus voltage (Vbus)-that is, where V_{rec} > ½ V_{bus} (e.g., V_{rec} > 465 Vdc, assuming V_{bus} = 930V_{dc}). Using Fast Fourier Transform (FFT) on the output studs shows that there is a broad distribution of noise in the 100-140kHz range. In accordance with the present disclosure, noise may be mitigated or reduced by turning the boost off-e.g., dropping the noise floor by ~10dB. This may be done by use of hysteretic voltage control. These features are illustrated in and described in more detail with respect to Figs. 3A-7, below.

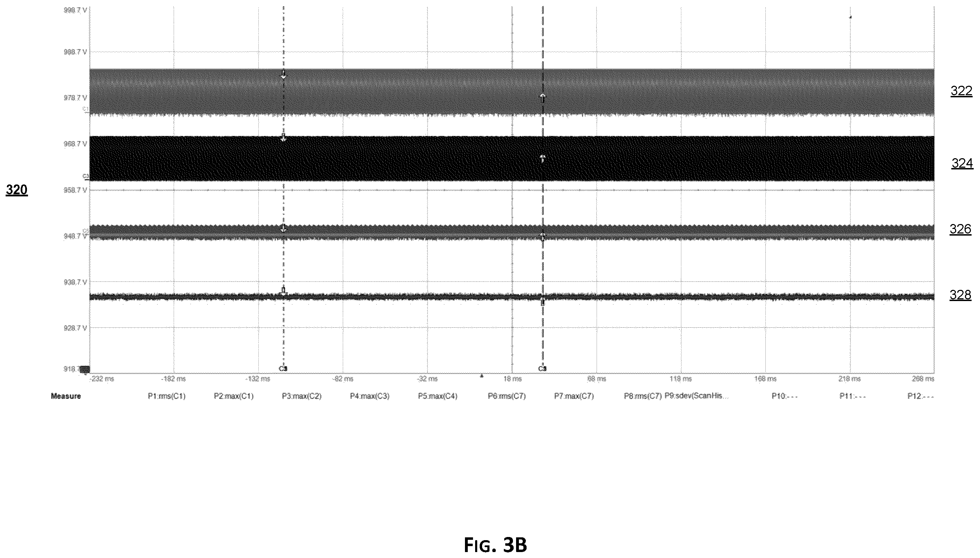

Figs. 3A-3B are graphs illustrating signal spectrum for output signals in communication medium. Shown in Figs. 3A and 3B are graphs 300 and 320, illustrating signal spectrum for output signals communicated in welding-type system. In particular, the output signals may be communicated using welding-type cables or connectors as communication medium based on weld circuit communication technology (e.g., ArcReach).

Each of the graphs 300 and 320 comprises data representing bus voltage in V, boost voltage in V, and boost current in A (y-axis) as functions of time in ms (x-axis). In particular, graphs 300 and 320 show boost related plots corresponding to, respectively, upper bus half (302 and 322), lower bus half (304 and 324), boost current (306 and 326), and total boost voltage (308 and 328). In this regard, graph 300 comprises data when the rectified voltage (V_{rect}) is greater than half bus voltage (V_{bus})-that is, where V_{rect} > ½ V_{bus}, which is approximately 465V_{dc}-whereas graph 320 comprises data corresponding to data when the rectified voltage (V_{rect}) is greater than half bus voltage (V_{bus})-that is, where V_{rect} > ½ V_{bus} (or 465 V_{dc}).

As illustrated by plots 302-308 and 322-328, due to the stacked bus, the boost operates in a "burst mode" at idle when V_{rect} < ½ V_{bus}, whereas when Vrect > ½ Vbus, the boost operates in a "continuous mode" with skip firing, which creates the noise as described herein. As such, as illustrated, the burst mode does not produce the broad-spectrum noise that skip pulse produces. Thus, operating in burst mode may allow for mitigating or eliminating the noise that may affect weld circuit communication.

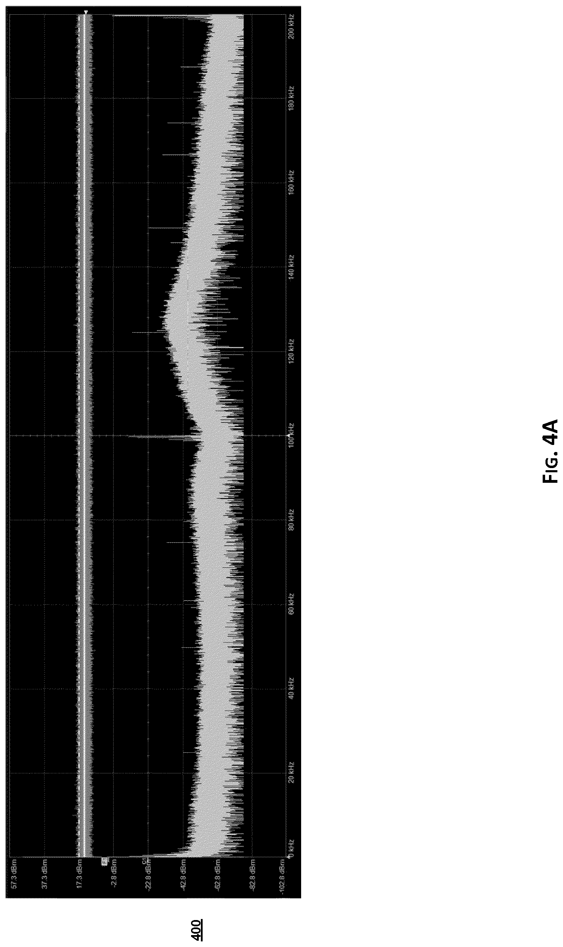

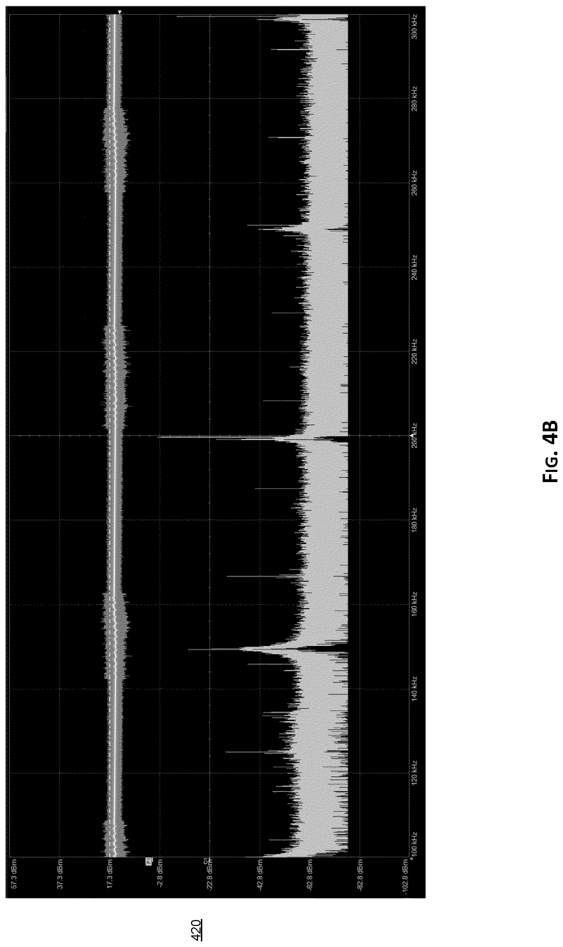

Figs. 4A-4B are graphs illustrating Fast Fourier Transform (FFT) of a portion of the frequency spectrum on a communication medium in a welding-type system. Shown in Figs. 4A and 4B are graphs 400 and 420 which illustrate Fast Fourier Transform (FFT) of a portion of the frequency spectrum in a communication medium used in a welding-type system. In particular, the communication medium may be a welding-type cable or connector used for weld circuit communication (e.g., ArcReach).

Each of the graphs 400 and 420 comprises data representing Fast Fourier transform of signal strength, in a medium used for weld circuit communication, in dBm (y-axis) as function of frequency in kHz (x-axis). In this regard, graph 400 comprises data corresponding to Fast Fourier transform when the rectified voltage (V_{rect}) is greater than half bus voltage (V_{bus})-that is, where V_{rect} > ½ V_{bus}, whereas graph 420 comprises data corresponding to Fast Fourier transform when the rectified voltage (V_{rect}) is greater than half bus voltage (V_{bus})-that is, where V_{rect} < ½ V_{bus}. For example, where V_{bus} is about 930 Vdc, graph 400 represents FFT of the signal when V_{rect} > approximately 465 V_{dc}, whereas graph 420 represents FFT of the signal when V_{rect} < approximately 465 V_{dc}. As illustrated by graphs 400 and 420, there is a broad distribution of noise in the 100-140kHz range when V_{rect} > ½ V_{bus}. Noise is not present, however, when V_{rect} < ½ V_{bus}. Noise is also not present when boost is off (V_{rect} > V_{bus}).

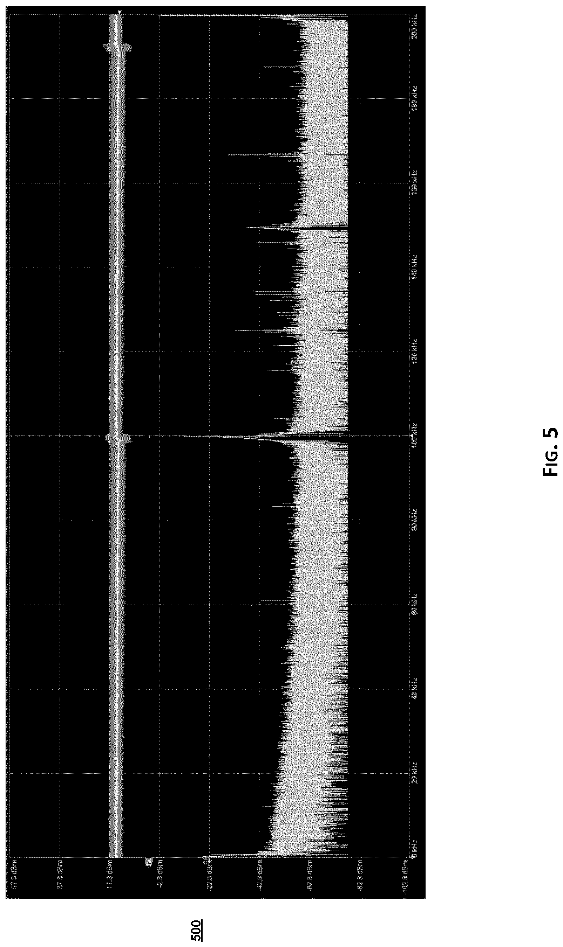

Fig. 5 is graph illustrating Fast Fourier Transform (FFT) of a portion of the frequency spectrum on a communication medium in a welding-type system when applying boost idle state adjustments. Shown in Fig. 5 is graph 500, illustrating Fast Fourier Transform (FFT) of a portion of the frequency spectrum in a communication medium within a welding-type system that is configurable to apply boost idle state adjustment. In particular, the communication medium may be welding-type cables or connectors being used for weld circuit communication (e.g., ArcReach).

The graph 500 comprises data representing Fast Fourier transform of signal strength, in a medium used for weld circuit communication, in dBm (y-axis) as function of frequency in kHz (x-axis). In this regard, graph 500 comprises data corresponding to the same frequency spectrum (portion) in a similar system as that used for the data captured in graphs 400 and 420, but with the system being modified to incorporate use of boost idle control as described herein. In other words, graph 500 comprises data corresponding to FFT of noise in the same system but when using boost idle state implementation, and under the same conditions where noise is generated-that is, that is, where V_{rect} > ½ V_{bus}, as captured in graph 400. As illustrated by graph 500, the use of boost idle control results in reduced noise, particularly in the 100-140 kHz band, with the noise being reduced by ~10dB compared to graph 400.

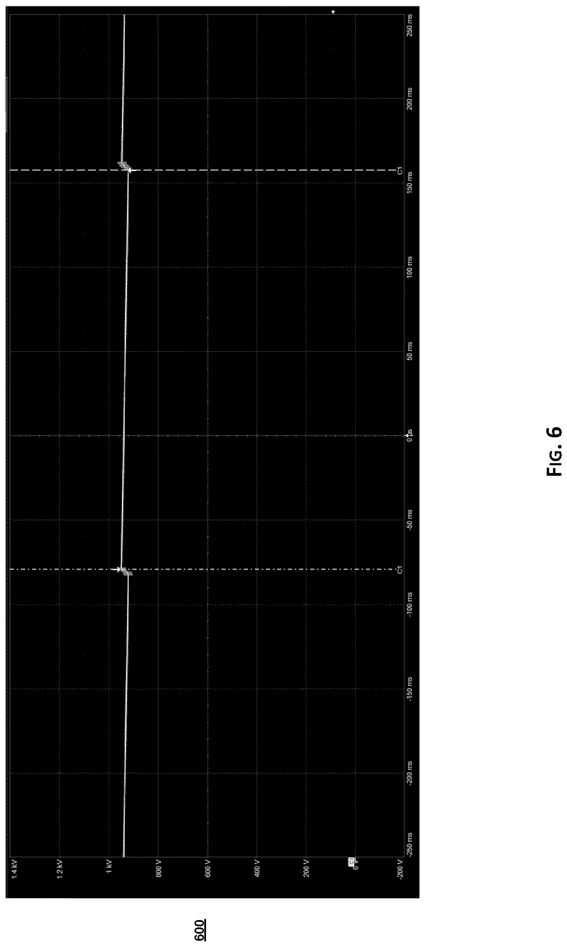

Fig. 6 is graph illustrating bus voltage when applying boost idle state adjustment. Shown in Fig. 6 is graph 600, illustrating bus voltage and effects thereon in a welding-type system that is configurable to apply boost idle state adjustment.

The graph 600 comprises data representing voltage in V (y-axis) as function of time in ms (x-axis). In particular, graph 600 comprises data corresponding to bus voltage (V_{bus}) in the system, illustrating effects of use of hysteretic voltage control, and specifically showing effects of turning the waveshape bit off and on. In this regard, as shown in graph 600, when the V_{bus} reaches pre-set low value, the waveshape bit is turned off and the V_{bus} then rises to a pre-set high value, at which point the waveshape bit is turned on and it stays on until reaching the pre-set low value again. This results in pre-determined duration (e.g., ~250 ms) of off-time in between bursts.

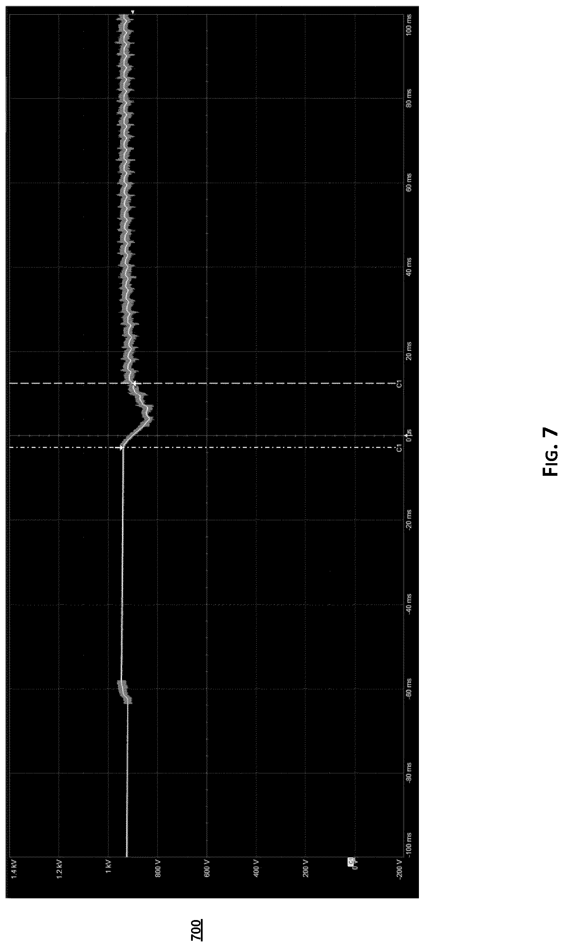

Fig. 7 is graph illustrating example load step from idle state into hot start. Shown in Fig. 7 is graph 700, illustrating load step from idle state into hot start in a welding-type system that is configurable to apply boost idle state adjustment. In particular, the welding-type system be configured to support weld circuit communication (e.g., ArcReach) using welding-type cables or connectors.

The graph 700 comprises data representing voltage in V (y-axis) as function of time in ms (x-axis). In particular, graph 700 comprises data corresponding to bus voltage (V_{bus}) in the system, illustrating the transient response in such system-that is, how fast the system needs to exist out of idle mode state and transition into normal operation. As shown in graph 700, when transitioning from idle state (e.g., 400A at 36V), the transient response time is relatively short (e.g., ~15-16 ms), thus demonstrating that use of boost idle state does not adversely affect performance of the system.

In various instances, when utilizing hysteretic mode boost voltage control as described herein, bind testing from 0-600 µH may yield consistent completion times within 12 seconds regardless of line voltage. The boost may have very long off periods (e.g., >200ms) and short pulses (e.g., <30ms) at idle. In some instances, the boost may be able to exit from idle state without bus collapsing during load steps. Further, when utilizing weld circuit communication, with the boost mode the noise floor may be 48-54dB after change.

Solutions based on the present disclosure improve performance compared to any existing solutions. For example, implementations based on the present disclosure may yield improved bind performance (e.g., binding with accessories connected via weld circuit communication based connections), improved communication at idle with the accessories, and/or improved idle power consumption. In this regard, the improvement in SNR in the communication band may result in faster ArcReach accessory bind times, more reliable binding, and better bind performance at longer cable distances. Further, the boost idle related updates may not have any (or minimal) effect on performance of weld circuit communication while the boost converter is under a normal load. In addition, as noted, in various implementations, existing hardware (circuits) may be used in facilitating and/or supporting the boost control. For example, in some instances, boost control may be implemented on top of an analog boost voltage regulator (e.g., current-mode control (CMC) analog boost voltage regulator) that is already incorporated and used in the system.

An example welding-type system, in accordance with the present disclosure, comprises a welding-type power source configured to provide power to one or more components of the welding-type system, the welding-type power source comprising control circuitry; wherein the welding-type power source forms weld circuit communication with at least one other component in the welding-type system; and wherein the control circuitry is configured to apply noise mitigation for reducing or eliminating noise in the weld circuit communication, and wherein applying the noise mitigation comprises using hysteretic voltage control when the welding-type power source is at idle.

In an example embodiment, the hysteretic voltage control comprises controlling boost associated with the welding-type power source.

In an example embodiment, controlling boost comprises turning boost off based on one or more conditions.

In an example embodiment, at least one condition relates to a relationship between a first voltage and a second voltage associated with the welding-type power source.

In an example embodiment, the first voltage comprises a rectified voltage and the second voltage comprises a bus voltage.

In an example embodiment, the relationship comprises the rectified voltage being greater than half the bus voltage.

In an example embodiment, at least one condition relates to a primary current associated with the welding-type power source.

In an example embodiment, the at least one condition comprises the primary current being less than 1A.

In an example embodiment, at least one condition comprises status of at least one phase detect bit associated with the welding-type power source.

In an example embodiment, hysteretic voltage control comprises controlling wave shaping of at least one voltage associated with the welding-type power source.

In an example embodiment, controlling the wave shaping comprises setting or adjusting a waveshape bit associated with the at least one voltage.

In an example embodiment, the control circuitry comprises a digital signal processing (DSP) microprocessor.

In an example embodiment, the digital signal processing (DSP) microprocessor is configured for facilitating and/or supporting weld circuit communication in the welding-type system.

In an example embodiment, the control circuitry comprises an analog boost voltage regulator.

In an example embodiment, the analog boost voltage regulator is configured for regulating voltage associated with mode of operation of the welding-type power source.

In an example embodiment, the mode of operation comprises idle mode.

In an example embodiment, the welding-type system further comprises one or more welding-type cables or connectors, and wherein the weld circuit communication is implemented via at least one of the one or more welding-type cables or connectors.

In an example embodiment, the control circuitry is configured to set or adjust at least a part of the noise mitigation to ensure regulatory compliance (e.g., with respect to emissions thresholds associated with applicable regulatory standards or requirements.

In an example embodiment, the control circuitry is configured to, when ensuring regulatory compliance, that the weld circuit communication meet or comply with emissions thresholds associated with applicable regulatory standards or requirements.

Other implementations in accordance with the present disclosure may provide a non-transitory computer readable medium and/or storage medium, and/or a non-transitory machine readable medium and/or storage medium, having stored thereon, a machine code and/or a computer program having at least one code section executable by a machine and/or a computer, thereby causing the machine and/or computer to perform the processes as described herein.

Accordingly, various implementations in accordance with the present disclosure may be realized in hardware, software, or a combination of hardware and software. The present disclosure may be realized in a centralized fashion in at least one computing system, or in a distributed fashion where different elements are spread across several interconnected computing systems. Any kind of computing system or other apparatus adapted for carrying out the methods described herein is suited. A typical combination of hardware and software may be a general-purpose computing system with a program or other code that, when being loaded and executed, controls the computing system such that it carries out the methods described herein. Another typical implementation may comprise an application specific integrated circuit or chip.

Various implementations in accordance with the present disclosure may also be embedded in a computer program product, which comprises all the features enabling the implementation of the methods described herein, and which when loaded in a computer system is able to carry out these methods. Computer program in the present context means any expression, in any language, code or notation, of a set of instructions intended to cause a system having an information processing capability to perform a particular function either directly or after either or both of the following: a) conversion to another language, code or notation; b) reproduction in a different material form.

While the present disclosure has been described with reference to certain implementations, it will be understood by those skilled in the art that various changes may be made and equivalents may be substituted without departing from the scope of the present disclosure. For example, block and/or components of disclosed examples may be combined, divided, re-arranged, and/or otherwise modified. In addition, many modifications may be made to adapt a particular situation or material to the teachings of the present disclosure without departing from its scope. Therefore, it is intended that the present disclosure not be limited to the particular implementation disclosed, but that the present disclosure will include all implementations falling within the scope of the appended claims.

Certain embodiments of the invention are described in the following clauses:
Clause 1 A welding-type system, comprising:
   a welding-type power source configured to provide power to one or more components of the welding-type system, the welding-type power source comprising control circuitry;
   wherein the welding-type power source forms weld circuit communication with at least one other component in the welding-type system; and
   wherein the control circuitry is configured to apply noise mitigation for reducing or eliminating noise in the weld circuit communication, and wherein applying the noise mitigation comprises using hysteretic voltage control when the welding-type power source is at idle.
Clause 2 The welding-type system according to clause 1, wherein the hysteretic voltage control comprises controlling boost associated with the welding-type power source.
Clause 3 The welding-type system according to clause 2, wherein controlling boost comprises turning boost off based on one or more conditions.
Clause 4 The welding-type system according to clause 3, wherein at least one condition relates to a relationship between a first voltage and a second voltage associated with the welding-type power source.
Clause 5 The welding-type system according to clause 4, wherein the first voltage comprises a rectified voltage and the second voltage comprises a bus voltage.
Clause 6 The welding-type system according to clause 5, wherein the relationship comprises the rectified voltage being greater than half the bus voltage.
Clause 7 The welding-type system according to clause 3, wherein at least one condition relates to a primary current associated with the welding-type power source.
Clause 8 The welding-type system according to clause 7, wherein the at least one condition comprises the primary current being less than 1A.
Clause 9 The welding-type system according to clause 3, wherein at least one condition comprises status of at least one phase detect bit associated with the welding-type power source.
Clause 10 The welding-type system according to clause 1, wherein hysteretic voltage control comprises controlling wave shaping of at least one voltage associated with the welding-type power source.
Clause 11 The welding-type system according to clause 10, wherein controlling the wave shaping comprises setting or adjusting a waveshape bit associated with the at least one voltage.
Clause 12 The welding-type system according to clause 1, wherein the control circuitry comprises a digital signal processing (DSP) microprocessor.
Clause 13 The welding-type system according to clause 12, wherein the digital signal processing (DSP) microprocessor is configured for facilitating and/or supporting weld circuit communication in the welding-type system.
Clause 14 The welding-type system according to clause 1, wherein the control circuitry comprises an analog boost voltage regulator.
Clause 15 The welding-type system according to clause 14, wherein the analog boost voltage regulator is configured for regulating voltage associated with mode of operation of the welding-type power source.
Clause 16 The welding-type system according to clause 15, wherein the mode of operation comprises idle mode.
Clause 17 The welding-type system according to clause 1, further comprising one or more welding-type cables or connectors, and wherein the weld circuit communication is implemented via at least one of the one or more welding-type cables or connectors.
Clause 18 The welding-type system according to clause 1, wherein the control circuitry is configured to set or adjust at least a part of the noise mitigation to ensure regulatory compliance.
Clause 19 The welding-type system according to clause 18, wherein the control circuitry is configured to, when ensuring regulatory compliance, that the weld circuit communication meets or complies with emissions thresholds associated with applicable regulatory standards or requirements.

## Claims

1. A welding-type system, comprising:
a welding-type power source configured to provide power to one or more components of the welding-type system, the welding-type power source comprising control circuitry;
wherein the welding-type power source forms weld circuit communication with at least one other component in the welding-type system; and
wherein the control circuitry is configured to apply noise mitigation for reducing or eliminating noise in the weld circuit communication, and wherein applying the noise mitigation comprises using hysteretic voltage control when the welding-type power source is at idle.

2. The welding-type system according to claim 1, wherein the hysteretic voltage control comprises controlling boost associated with the welding-type power source.

3. The welding-type system according to claim 2, wherein controlling boost comprises turning boost off based on one or more conditions.

4. The welding-type system according to claim 3, wherein at least one condition relates to a relationship between a first voltage and a second voltage associated with the welding-type power source.

5. The welding-type system according to claim 4, wherein the first voltage comprises a rectified voltage and the second voltage comprises a bus voltage.

6. The welding-type system according to claim 5, wherein the relationship comprises the rectified voltage being greater than half the bus voltage.

7. The welding-type system according to claim 3, wherein at least one condition relates to a primary current associated with the welding-type power source.

8. The welding-type system according to claim 7, wherein the at least one condition comprises the primary current being less than 1A.

9. The welding-type system according to claim 3, wherein at least one condition comprises status of at least one phase detect bit associated with the welding-type power source.

10. The welding-type system according to claim 1, wherein hysteretic voltage control comprises controlling wave shaping of at least one voltage associated with the welding-type power source and optionally,
wherein controlling the wave shaping comprises setting or adjusting a waveshape bit associated with the at least one voltage.

11. The welding-type system according to claim 1, wherein the control circuitry comprises a digital signal processing (DSP) microprocessor and optionally
wherein the digital signal processing (DSP) microprocessor is configured for facilitating and/or supporting weld circuit communication in the welding-type system.

12. The welding-type system according to claim 1, wherein the control circuitry comprises an analog boost voltage regulator.

13. The welding-type system according to claim 12, wherein the analog boost voltage regulator is configured for regulating voltage associated with mode of operation of the welding-type power source and optionally,
wherein the mode of operation comprises idle mode.

14. The welding-type system according to claim 1, further comprising one or more welding-type cables or connectors, and wherein the weld circuit communication is implemented via at least one of the one or more welding-type cables or connectors or wherein the control circuitry is configured to set or adjust at least a part of the noise mitigation to ensure regulatory compliance.

15. The welding-type system according to claim 14, wherein the control circuitry is configured to, when ensuring regulatory compliance, that the weld circuit communication meets or complies with emissions thresholds associated with applicable regulatory standards or requirements.
